# EUROPÄISCHE PATENTSCHRIFT

(11) **EP 1 248 091 B1**
(45) Veröffentlichungstag und Bekanntmachung des Hinweises auf die Patenterteilung: **19.08.2009**
(21) Anmeldenummer: 01108274.0
(22) Anmeldetag: 02.04.2001
(51) Int. Cl.: G01L 19/00

(54) **Ausströmsicherung**
Safety device for flow system
Appareil de protection pour système d'écoulement

(43) Veröffentlichungstag der Anmeldung: 09.10.2002
(73) Patentinhaber: HUBA CONTROL AG, 5436 Würenlos (CH)
(72) Erfinder: Anliker, Peter, 5033 Buchs (CH)
(74) Vertreter: Schaad, Balass, Menzl & Partner AG

(56) Entgegenhaltungen:
- EP-A- 0 240 891
- GB-A- 1 075 355
- GB-A- 1 118 223
- US-A- 3 967 504
- US-A- 4 683 910
- US-A- 5 563 336
- US-A- 5 796 008

## Beschreibung

Die Erfindung betrifft eine Ausströmsicherung für den Sensor eines Drucksystems, mit einem das Drucksystem mit dem Sensor verbindenden, durch einen Anschlusskörper geführten Anschlusskanal.

Um an einem Drucksystem Messungen vorzunehmen, ist es üblich, über einen Anschlusskanal oder eine Anschlussöffnung eine Verbindung zu einem Sensor vorzusehen. Diese bildet jedoch eine Schwachstelle des Drucksystems. Insbesondere ein starker Druckanstieg oder auch ein Fehler am Sensor kann diesen soweit beschädigen, dass es zur intensiven Ausströmung des im Drucksystem eingeschlossenen Mediums kommt, die besonders bei sehr hohen Drücken mit einer erheblichen Gefährdung verbunden ist.

Die US-A-3,967,504 offenbart eine Differenzdruck-einrichtung, bei welcher ein in einem Gehäuse angeordneter Differenzdrucksensor durch Membranen einerseits von der Hochdruckzuleitung und andererseits von der Niederdruckzuleitung abgetrennt ist. Um bei niederdruckseitigem Überdruck eine Membrane des Sensors vor überbeanspruchung zu schützen, weist diese, in der Mitte, ein Ventilglied auf, das bei Überdruck an einem Ventilsitz zur Anlage gelangen kann.

In der DE-A-3141368 wird eine Vorrichtung zum schnellen Verschliessen einer Gasleitung für explosive Gase bei Gasexplosionen beschreiben. Die Vorrichtung weist dazu ein Rohrgehäuse auf, das um einen Schliesskörper einen Ringkanal für durchströmende Gase bildet. Der Schliesskörper wird mittels einer Sollbruchhalterung gehalten und bei einer Gasexplosion durch einen Explosionsdruck auf einen zugeordneten Dichtsitz in eine Schliessstellung gepresst, um den weiteren Durchfluss des Gases und ein Ausbreiten der Explosion zu verhindern.

Der Erfindung liegt die Aufgabe zu Grunde, auf konstruktiv einfache Weise eine solche Gefährdung zu vermeiden und folglich für einen Sensor eine schnell, sicher und selbsttätig wirkende Ausströmsicherung zu finden. Die Lösung dieser Aufgabe erfolgt aufgrund der kennzeichnenden Merkmale des Patentanspruchs 1. Vorteilhafte Ausgestaltungen der Erfindung sind Gegenstand der abhängigen Patentansprüche und der folgenden Beschreibung an Hand der Zeichnungen zu entnehmen. Es zeigt:
- Fig. 1: ein Ausführungsbeispiel einer Ausströmsicherung vergrössert und in Axialschnittdarstellung,
- Fig.3: einen Radialschnitt durch den Schliesskörper entlang der Linie III-III der Fig.2,
- Fig.4: eine Endansicht des Schliesskörpers nach Fig.2 in Richtung auf sein Halteteil, und
- Fig.5: eine Endansicht des Schliesskörpers nach Fig.2 in Richtung auf sein Schliessteil.

Die Ausströmsicherung des Ausführungsbeispiels hat einen Anschlusskörper 1 mit einem zentralen Anschlusskanal 2 für den Anschluss eines schematisch dargestellten Sensors 3 an ein nichtdargestelltes Drucksystem, das hohe Drücke von beispielsweise bis zu 800 bar beinhaltet. Hierzu ist an beiden Enden des Anschlusskörpers 1 ein Gewindestutzen 4 und 5 vorgesehen, von denen einer zum Gewindeeingriff in eine Wandöffnung oder einen Stutzen des Drucksystems vorgesehen ist und der andere der Anbringung eines nichtdargestellten Gehäuses des Sensors 3 dient. Der grösste Durchmesser des Anschlusskörpers 1 beträgt beispielsweise 20 mm.

Ein im Anschlusskanal 2 vorgesehenes Ventil 6 hat die Aufgabe , bei Auftreten eines Strömungsdruckes am Ventil 6, den Anschlusskanal 2 zu schliessen. Dies ist aus Sicherheitsgründen anzustreben. Denn abgesehen von bei der Anschlussmontage des Sensors 3 auftretenden geringen Strömungen, kann am Ventil 6 nur dann eine erhebliche Strömung auftreten, wenn der Sensor 3 defekt ist.

Um bei der Anschlussmontage des Sensors 3 an das Drucksystem diesen mit dem im Drucksystem eingeschlossenen Medium aufzufüllen und die Druckübertragung zum Sensor 3 zu gewährleisten, ist weiterhin zwischen einer in Strömungsrichtung vor dem Schliesskörper 7 des Ventils 6 befindlichen Strecke 8 des Anschlusskanals 2 und einer hinter diesem und vor dem Ventilsitz 9 des Ventils 6 befindlichen Kammer 10 des Anschlusskanals 2 eine Strömungsverbindung mit relativ zum Anschlusskanal 2 eng begrenztem Querschnitt vorgesehen, die im Folgenden näher beschrieben wird.

Durch den engbegrenzten Querschnitt der Strömungsverbindung ergibt sich im Schadensfall am Schliesskörper 7 ein Differenzdruck, der ausreicht, die Haltekraft von eine Sollbruchstelle 13 aufweisenden Haltemitteln zu überwinden, die den Schliesskörper 7 bzw. einen Schliessteil desselben in geöffneter Ventilposition halten.

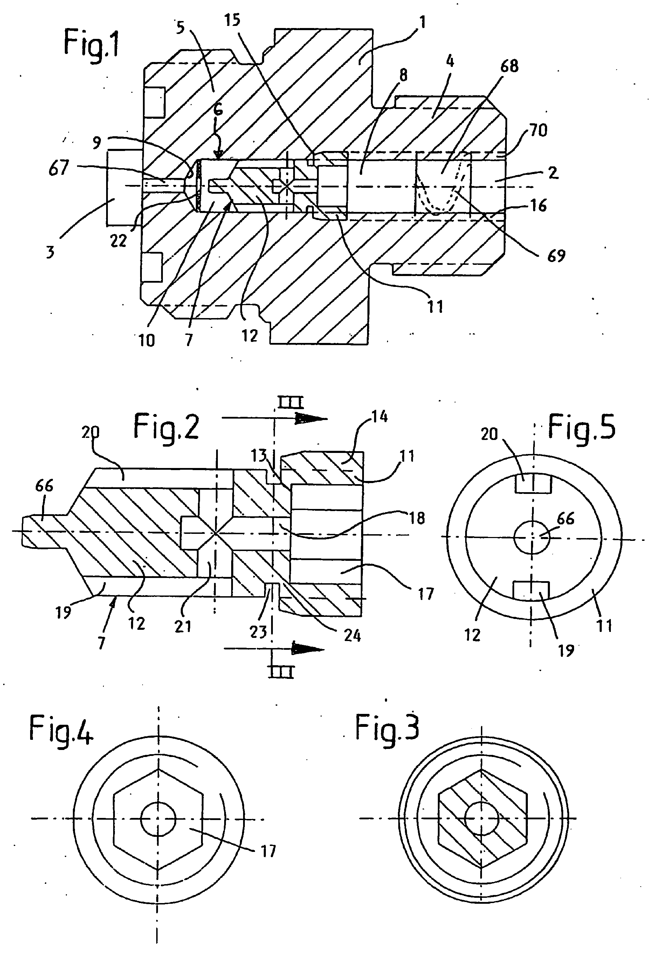

Die Ausströmsicherung des Ausführungsbeispieles nach Fig.1 bis Fig.5 hat einen einstückigen im Wesentlichen zweiteiligen Schliesskörper 7, d.h. einen Halteteil 11 und einen zu diesem gleichachsigen Schliessteil 12, die über Haltemittel bildende Sollbruchmittel 13, z.B. eine Sollbruchstelle, miteinander verbunden sind. Der Halteteil 11 hat ein Aussengewinde 14 und ist mit diesem bis zum Ende 15 eines Innengewindes 16 des Anschlusskanals 2 eingeschraubt, so dass eine axiale Position des Schliessköpers in Abstand von dem Ventilsitz 9 fixiert ist. Der zum Einschrauben erforderliche Werkzeugeingriff erfolgt in eine im Halteteil 11 vorgesehene Sechskantausnehmung 17. Im Anschluss an das Gewindeende 15 setzt sich der Anschlusskanal 2 entsprechend dem Innendurchmesser des Innengewindes 16 fort und gibt dem Schliessteil 12 eine Führung für seine axialgerichtete Schliessbewegung.

Die zuvor genannte Strömungsverbindung mit relativ zum Anschlusskanal 2 engbegrenztem Querschnitt ist durch den Schliessteil 12 geführt und besteht aus einer von der Sechskantausnehmung 17 ausgehenden, zentralen Sacklochbohrung 18, aus zwei Axialnuten 19,20, die sich aussen an dem zylindrischen Schliessteil 12 entlang erstrecken und aus einer Querbohrung 21, die die Sacklochbohrung 18 mit beiden diametral zueinander angeordneten Axialnuten 19,20 verbindet.

Die Schliessbewegung des Schliessteiles zur Herstellung eines Schliesskontaktes mit dem hier leicht konischen Ventilsitz 9 bzw. mit einer vor diesem angeordneten, ringförmigen Dichtscheibe 22 setzt den Bruch der Sollbruchstelle 13 voraus. Diese ist durch eine umlaufende Nut 23 gebildet, die in geringem Abstand von der Sechskantausnehmung und entsprechend der Darstellung in Fig.3 zu dieser gleichlaufend ausgeführt ist, so dass ein Bereich 24 von reduziertem Querschnitt gegeben ist, an dem bei bestimmten Strömungsdruck am Schliessteil 12 ein Abriss erfolgt. Da die Abreisskraft auch durch die Art des Werkstoffes bestimmt ist, besteht der Schliesskörper 7 vorzugsweise aus einem Kunststoff oder einem Metall mit verhältnismässig geringer Zugfestigkeit, wie es auch aus fertigungstechnischen Gründen vorzuziehen ist. Die Sollbruchstelle kann auch auf andere geeignete Weise hergestellt sein.

Ein stirnseitiger Zapfen 66 des Schliesskörpers 7 greift in Schliessposition in einen an seinen Durchmesser mit geringem Spiel angepassten, verengten Teil 67 des Anschlusskanals 2 ein und trägt somit zur Sicherheit der Ventilfunktion bei.

Um im Schadensfall am Sensor 3 den am Schliesskörper entstehenden Ausströmdruck zu reduzieren, kann auf an sich bekannte Weise im Anschlusskanal 2 vor dem Schliesskörper ein Drosselungselement 68 mit einer spiralförmigen Durchströmnut 69 angeordnet sein, wie es in Fig.1 angedeutet ist. Für dessen Anbringung ist z.B. im Anschlusskanal 2 zuströmseitig ein Innengewinde 70 vorgesehen.

## Patentansprüche

1. Ausströmsicherung für einen Sensor eines Drucksystems, mit einem das Drucksystem mit dem Sensor (3) verbindenden, durch einen Anschlusskörper (1) geführten Anschlusskanal (2), einem im Anschlusskanal (2) angeordneten, im Schadensfall auf den Strömungsdruck von in Richtung zu einem defekten, durchlässig gewordenen Sensor (3) ausströmenden Medium ansprechenden Schliessventil (6) und einer zwischen einem in Strömungsrichtung vor einem Schliessteil (12) eines Schliesskörpers (7) des Schliessventils (6) befindlichen Teil des Anschlusskanals (2) und einem hinter dem Schliessteil (12) und vor einem Ventilsitz (9) befindlichen Teil (10) des Anschlusskanals (2) vorhandenen, durch den Schliessteil (12) geführten Strömungsverbindung (18, 21, 19) mit einem relativ zum Anschlusskanal (2) eng begrenzten Querschnitt, wobei eine Ansprechkraft zur Bewegung des Schliessteils (12) durch eine Haltekraft von als Sollbruchmittel (13) ausgebildeten Haltemitteln bestimmt ist, die den Schliessteil (12) in Distanz von einem Ventilsitz (9) halten, und die Haltekraft der Sollbruchmittel (13) bei einer sich im Schadensfall am Schliessteil (12) ergebenden Druckdifferenz überwunden wird.

2. Ausströmsicherung nach Anspruch 1, **dadurch gekennzeichnet, dass** die Haltemittel den Schliessteil (12) mit einem im Anschlusskanal (2) fixierten Halteteil (11) zu dem einstückigen Schliesskörper (7) verbinden.

3. Ausströmsicherung nach Anspruch 2, **dadurch gekennzeichnet, dass** der Anschlusskanal (2) ein Gewinde (70) aufweist und der Schliesskörper (7) über seinen Halteteil (11) durch Eingriff in das Gewinde (70) im Anschlusskanal (2) fixiert ist.

4. Ausströmsicherung nach Anspruch 2 oder 3, **dadurch gekennzeichnet, dass** der Schliesskörper (7) zwischen dem Halteteil (11) und dem Schliessteil (12) eine umlaufende Nut (23) aufweist.

5. Ausströmsicherung nach einem der Ansprüche 1 - 4, **dadurch gekennzeichnet, dass** der Anschlusskanal (2) dem Schliessteil (12) eine Führung für seine axialgerichtete Schliessbewegung gibt.

6. Ausströmsicherung nach Ansprüchen 1 - 5, **dadurch gekennzeichnet, dass** die Strömungsverbindung durch den Schliessteil (12) geführt ist.

7. Ausströmsicherung nach Anspruch 6, **dadurch gekennzeichnet, dass** die Strömungsverbindung sich aussen am zylindrischen Schlieseteil (12) entlang erstreckende Axialnuten (19, 20) aufweist.

8. Ausströmsicherung nach Anspruch 6, **dadurch gekennzeichnet, dass** die Axialnuten (19, 20) mit einer zentralen Sacklochbohrung (18) verbunden sind, die ihrerseits mit dem vor dem Schliessteil(12) befindenden Teil des Anschlusskanals (2) strömungsverbunden ist.

## Claims

1. Outflow safety device for a sensor in a pressure system, having a connecting channel (2) which connects the pressure system to the sensor (3) and is guided through a connecting body (1), a closing valve (6) which is arranged in the connecting channel (2) and, in the event of damage, responds to the flow pressure of medium flowing out in the direction of a defective sensor (3) which has become permeable, and a flow connection (18, 21, 19) which is provided between a part of the connecting channel (2) that is upstream of a closing part (12) of a closing body (7) of the closing valve (6) in the direction of flow and a part (10) of the connecting channel (2) that is downstream of the closing part (12) and upstream of a valve seat (9), is guided through the closing part (12) and has a cross section that is narrowly restricted relative to the connecting channel (2), a response force for moving the closing part (12) being determined by a holding force of holding means which are in the form of predetermined breaking means (13) and hold the closing part (12) at a distance from a valve seat (9), and the holding force of the predetermined breaking means (13) being overcome in the case of a pressure difference which results in the event of damage to the closing part (12).

2. Outflow safety device according to Claim 1, **characterized in that** the holding means connect the closing part (12) to a holding part (11) fixed in the connecting channel (2) to form the integral closing body (7).

3. Outflow safety device according to Claim 2, **characterized in that** the connecting channel (2) has a thread (70), and the closing body (7) is fixed, via its holding part (11), by engaging in the thread (70) in the connecting channel (2).

4. Outflow safety device according to Claim 2 or 3, **characterized in that** the closing body (7) has a circumferential groove (23) between the holding part (11) and the closing part (12).

5. Outflow safety device according to one of Claims 1-4, **characterized in that** the connecting channel (2) provides the closing part (12) with a guide for its axially directed closing movement.

6. Outflow safety device according to Claims 1-5, **characterized in that** the flow connection is guided through the closing part (12).

7. Outflow safety device according to Claim 6, **characterized in that** the flow connection has axial grooves (19, 20) which extend along the outside of the cylindrical closing part (12).

8. Outflow safety device according to Claim 6, **characterized in that** the axial grooves (19, 20) are connected to a central blind hole (18) which, for its part, is flow-connected to that part of the connecting channel (2) which is upstream of the closing part (12).

## Revendications

1. Protection pour système d'écoulement pour un capteur d'un système de pression, comprenant un canal de raccordement (2) reliant le système de pression au capteur (3), guidé à travers un corps de raccordement (1), une soupape de fermeture (6) disposée dans le canal de raccordement (2), réagissant en cas de panne à la pression d'écoulement de fluide s'écoulant dans la direction d'un capteur en panne (3) devenu perméable, et une connexion d'écoulement (18, 21, 19) existant entre une partie du canal de raccordement (2) se trouvant dans la direction d'écoulement avant une partie de fermeture (12) d'un corps de fermeture (7) de la soupape de fermeture (6) et une partie (10) du canal de raccordement (2) se trouvant derrière la partie de fermeture (12) et avant un siège de soupape (9), guidée à travers la partie de fermeture (12), ayant une section transversale limitée étroitement par rapport au canal de raccordement (2), une force de réaction pour le déplacement de la partie de fermeture (12) étant définie par une force de retenue de moyens de retenue réalisés sous forme de moyens destinés à la rupture (13), lesquels retiennent la partie de fermeture (12) à distance d'un siège de soupape (9), et la force de retenue des moyens destinés à la rupture (13) étant surmontée dans le cas d'une différence de pression produite en cas de panne au niveau de la partie de fermeture (12).

2. Protection pour système d'écoulement selon la revendication 1, **caractérisée en ce que** les moyens de retenue relient la partie de fermeture (12) à une partie de retenue (11) fixée dans le canal de raccordement (2) pour former un corps de fermeture (7) d'une seule pièce.

3. Protection pour système d'écoulement selon la revendication 2, **caractérisée en ce que** le canal de raccordement (2) présente un filetage (70) et le corps de fermeture (7) est fixé par sa partie de retenue (11) par engagement dans le filetage (70) dans le canal de raccordement (2).

4. Protection pour système d'écoulement selon la revendication 2 ou 3, **caractérisée en ce que** le corps de fermeture (7) présente entre la partie de retenue (11) et la partie de fermeture (12) une rainure périphérique (23).

5. Protection pour système d'écoulement selon l'une quelconque des revendications 1 à 4, **caractérisée en ce que** le canal de raccordement (2) fournit à la partie de fermeture (12) un guidage pour son déplacement de fermeture orienté axialement.

6. Protection pour système d'écoulement selon les revendications 1 à 5, **caractérisée en ce que** la connexion d'écoulement est guidée à travers la partie de fermeture (12).

7. Protection pour système d'écoulement selon la revendication 6, **caractérisée en ce que** la connexion d'écoulement présente des rainures axiales (19, 20) s'étendant à l'extérieur le long de la partie de fermeture cylindrique (12).

8. Protection pour système d'écoulement selon la revendication 6, **caractérisée en ce que** les rainures axiales (19, 20) sont connectées à un alésage à trou borgne central (18) qui est connecté fluidiquement pour sa part à la partie du canal de raccordement (2) se trouvant avant la partie de fermeture (12).
